# EUROPEAN PATENT APPLICATION

(11) **EP 0 823 571 A2**
(43) Date of publication of application: **11.02.1998**
(21) Application number: 97306042.9
(22) Date of filing: 08.08.1997
(51) Int. Cl.: F16H 59/10, F16H 59/12, B60K 20/06

(54) **Steering column automatic transmission shift lever**

(30) Priority: 09.08.1996 JP 210894/96
(71) Applicant: Mannoh Kogyo Co., Ltd., Imahonmachi, 4-chome, 14-ban, 24-gou (JP)
(72) Inventor: Tazia, Akira, Aichi-ken, Aichi-gun, Tougou-cho (JP)
(74) Representative: Paget, Hugh Charles Edward

(57) **Abstract**

In a column AT shift lever, a select cable (8) extending through the interior of a shift lever body (1) is curved inside a shift knob (2) disposed on a distal end of the shift lever body. An end (9) of the select cable is fixed to a select button (4) slidably provided inside the shift knob. By pressing in the select button, the select cable is directly operated easily with a reduced force loss and a reduced sliding resistance.

## Description

The entire disclosure of Japanese Patent Application No. Hei 8-210894 filed on August 9, 1996 including the specification, drawings and abstract is incorporated herein by reference in its entirety.

### BACKGROUND OF THE INVENTION

### 1. Field of the invention

The present invention relates to a column automatic transmission (AT) shift lever for an automotive automatic transmission.

### 2. Description of the Related Art

A typical column AT shift lever is constructed such that a shift lever device is positioned near a steering column, and shift operation is performed by turning the shift lever about a control shaft disposed parallel to the steering column. A column AT shift lever is disclosed in, for example, Japanese Utility Model Laid-Open No. Sho 63-43833, in which an operation (select operation) for bypassing a detent member provided for restricting unintentional shift operation is performed by pressing in a select button provided in a shift knob, so that the action is transmitted to the detent member by a select cable extending through a hollow shift lever body.

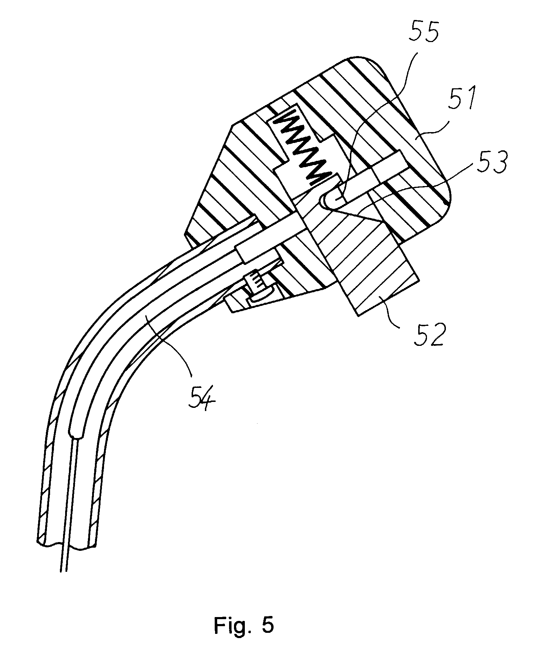

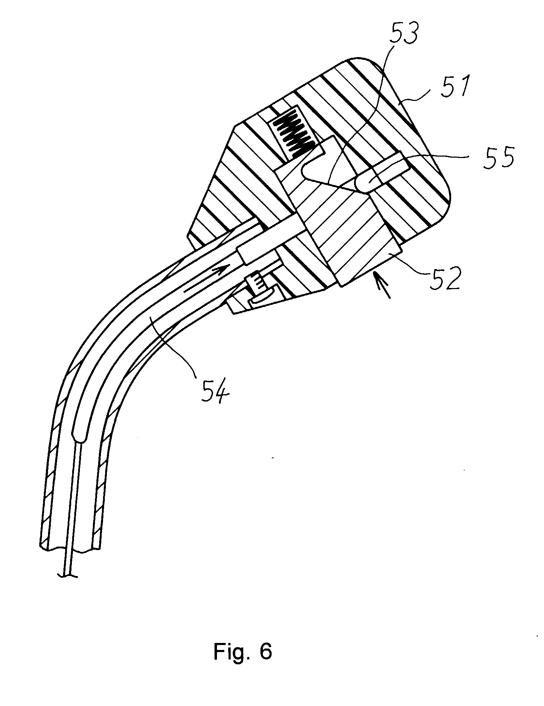

In the column AT shift lever described in the aforementioned Japanese Utility Model Laid-Open application, as shown in Figs. 5 and 6, a select button 52 disposed inside a shift knob 51 is provided with a cam surface 53, which engages with a moving member 55 disposed on an upper end of a select cable 54, so that when the select button 52 is pressed in, the select cable 54 is pulled due to the sliding of the moving member 55 along the cam surface 53. Therefore, there are problems in that the force loss and the sliding resistance on the cam surface 53 are large requiring a great force to operate the select button 52, and in that the size of the shift knob 51 must be increased in order to provide a sufficient stroke of the select button 52 and a sufficient stroke of the select cable 54.

### SUMMARY OF THE INVENTION

Accordingly, it is an object of the present invention to provide a column AT shift lever that solves the above-stated problems of the conventional art and makes it possible to operate a select button at ease by reducing the force loss and the sliding resistance and, further, enables a size reduction of a shift knob.

According to one aspect of the present invention, there is provided a column AT shift lever including a selecting member slidably provided inside a shift knob provided on a distal end of a shift lever body. The selecting member is elastically urged by an elastic body so that a head portion of the selecting member protrudes from the shift knob. A select cable extends inside the shift lever body, and an end portion of the select cable is fixed to the selecting member. Thereby the select cable is operable by sliding the selecting member.

The select cable may be curved inside the shift knob. The selecting member may have a generally letter-L shape. The elastic body may be a coil spring. The selecting member may protrude from a side face of the shift knob, the side face being relatively close to the shift lever body.

The selecting member may be a select button slidably disposed in a long hole which extends in the shift knob substantially perpendicularly to the shift lever body. The select cable maybe fixed to an inner side of the select button by a pin. A stopper portion may be provided in the long hole to prevent the select button from falling apart.

According to another aspect of the present invention, there is provided a column AT shift lever including selecting member slidably provided inside a generally L-shaped shift knob provided on a distal end of a shift lever body. The selecting member is elastically urged by an elastic body so that a head portion of the selecting member protrudes from the shift knob. A select cable extends inside the shift lever body, and is curved inside the shift knob. An end portion of the select cable is fixed to the selecting member.

The end portion of the select cable may be fixed to the selecting member, and the other end of the select cable may be connected to an end portion of a select plate. The column AT shift lever may further have a construction wherein the end portion of the select cable is connected to the selecting member by a pin, and the select plate is capable of being turned when, by a sliding movement of the select button into the shift knob transmitted by the select cable to a connecting portion of the select plate, the connecting portion of the select plate is pulled. Further, a detent plate may be provided at another end of the select plate, for engaging with the select plate so as to restrict operation of the shift lever body. A shift lock plate may be engaged with the select plate so as to restrict the turning of the select plate.

### BRIEF DESCRIPTION OF THE DRAWINGS

The foregoing and further objects, features and advantages of the present invention will become apparent from the following description of a preferred embodiment with reference to the accompanying drawings, wherein like numerals are used to represent like elements and wherein:
Fig. 1 is an overall view of a column AT shift lever according to the present invention;
Fig. 2 is a left side view of the column AT shift lever shown in Fig. 1;
Fig. 3 is a sectional view of portions of the column AT shift lever illustrating a state where the select button is released;
Fig. 4 is a sectional view illustrating a state where the select button is pressed in;
Fig. 5 is a sectional view of portions of a conventional column AT shift lever; and
Fig. 6 is a sectional view of portions of the conventional column AT shift lever.

### DETAILED DESCRIPTION OF PREFERRED EMBODIMENT

A preferred embodiment of the present invention will be described in detail hereinafter with reference to the accompanying drawings.

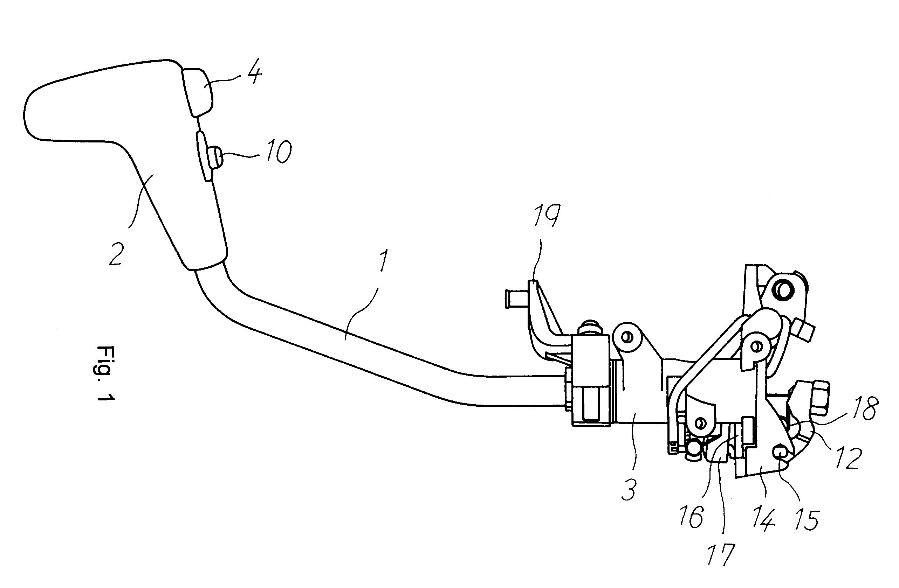

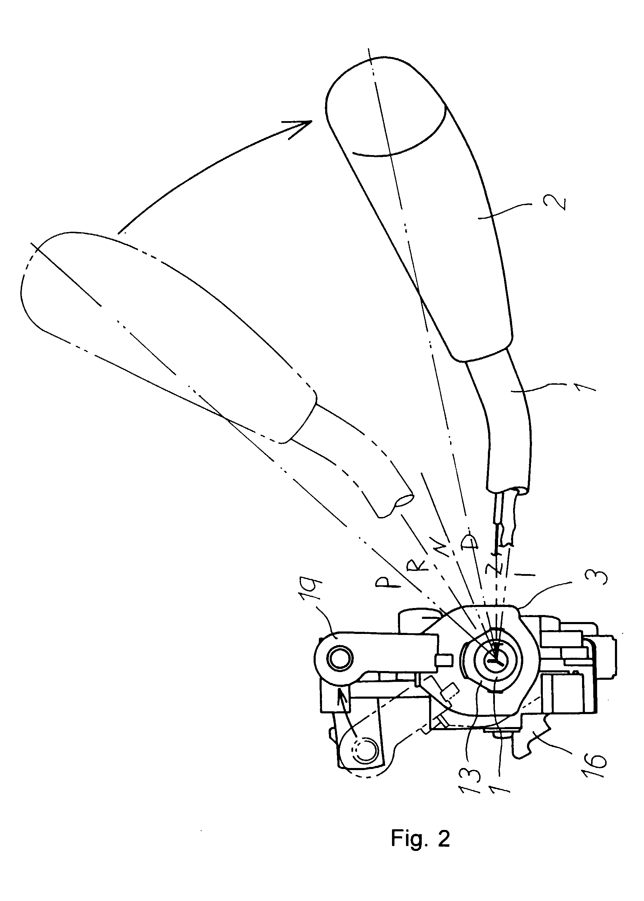

Fig. 1 shows an overall view of a column AT shift lever according to the present invention, in which 1 indicates a pipe-shaped shift lever body, and 2 indicates an L-shaped shift knob provided on a distal end of the shift lever body. A base portion of the shift lever body 1 is retained near a steering column (not shown) by a retainer 3. The shift lever body 1 is capable of being turned to each of positions P, R, N, D, 2, 1 and the like, as indicated in Fig. 2.

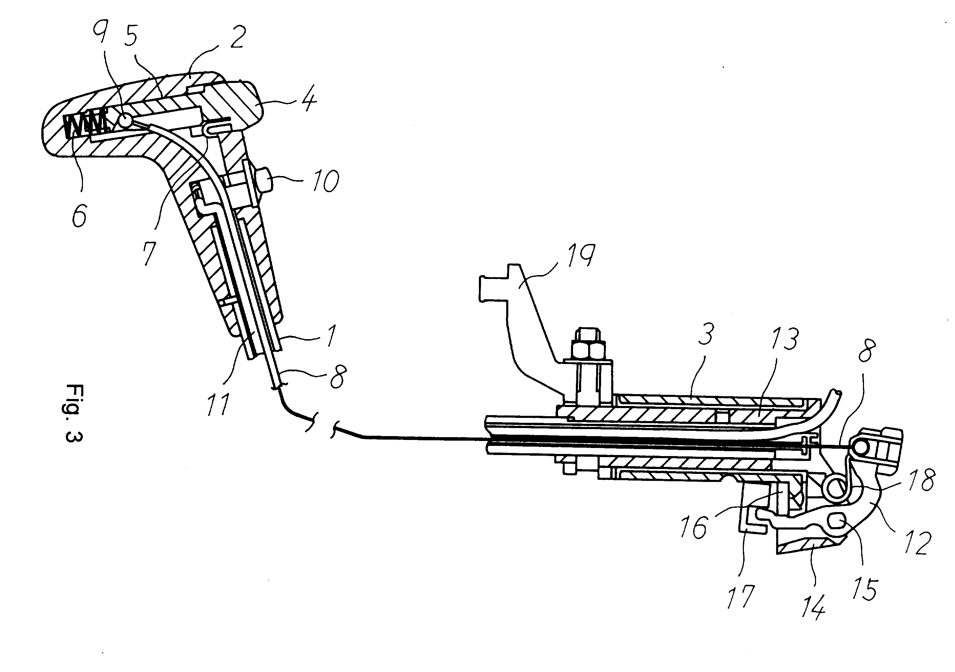

Referring to Fig. 3, a select button 4 is slidably disposed inside the shift knob 2. More specifically, the select button 4 is slidably disposed in a long hole 5 formed inside the shift knob and extending substantially perpendicularly to the shift lever body 1. Due to a return spring 6 disposed deep inside the long hole 5, a head portion of the select button 4 protrudes from a side face of shift knob 2, the side face being relatively close to the shift lever body 1. A stopper 7 is provided for preventing the select button 4 from falling apart.

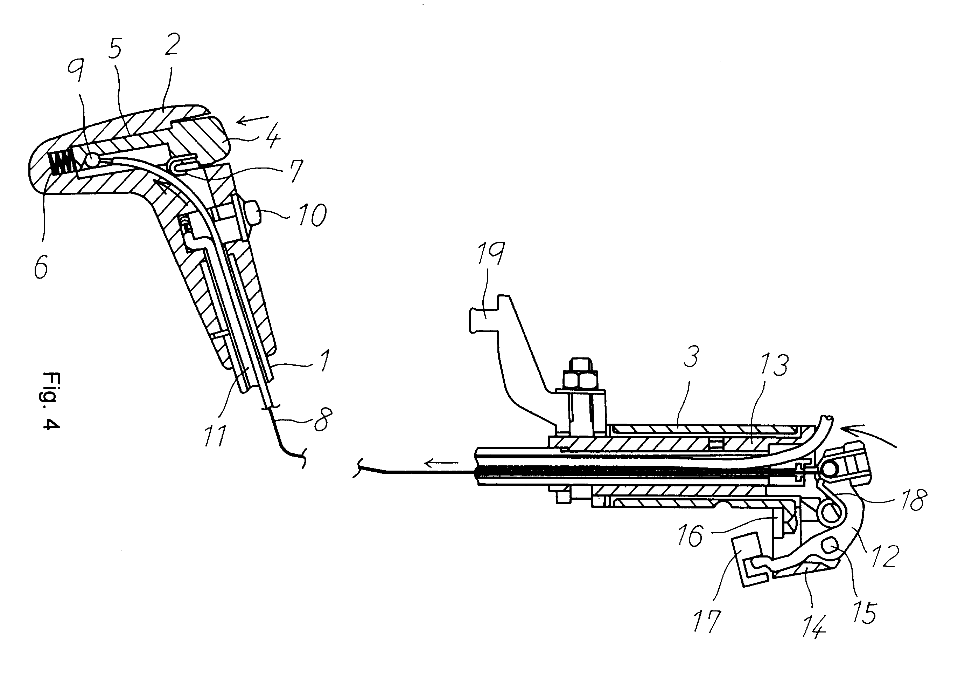

A select cable 8 extends through an interior of the pipe-shaped shift lever body 1. As shown in Fig 3, the select cable 8 is curved inside the shift knob 2, and an end of the select cable 8 is fixed to an inner side of the select button 4 by a pin 9. Thereby, when the select button 4 is pressed from the position indicated in Fig. 3 into the shift knob 2 as shown in Fig. 4 against the spring force of the return spring 6, the select cable 8 is directly pulled by the select button 4. An overdrive switch 10 is provided in the shift knob 2. An overdrive harness 11 extends through the interior of the shift lever body 1.

As show in Figs. 3 and 4, the other end of the select cable 8 is connected to an end of a select plate 12. The select plate 12 is pivoted by a pivot shaft 15 to a plate portion 14 protruding from a shaft 13 to which a base end of the shift lever body 1 is fixed. The other end of the select plate 12 is engaged with a detent plate 16 which is fixed to a retainer 3 so that detent plate 16 forms a plane perpendicular to the shaft 13. A shift lock plate 17, a main return spring 18 mounted on the select plate 12, and a control lever 19 projected from the shaft 13, are also provided.

The column AT shift lever according to this embodiment of the present invention is similar to a conventional AT shift lever in that a shift operation is performed by turning the shift lever body 1 about the retainer 3 as indicated in Fig. 2 so that the shaft 13 and the control lever 19 turn. However, when the select button 4 is pressed into the shift knob 2 against the return spring 6, as shown in Fig. 4, in order to perform a shift, for example, from the P position to the D position, the select cable 8 is directly pulled by the select button 4 so that the select plate 12 becomes disengaged from the detent plate 16 allowing the shift lever body 1 to be turned for the shift operation.

As understood from the above description, since the select cable 8 is curved inside the shift knob 2 and the upper end of the select cable 8 is fixed to the select button 4, the select cable 8 can be directly operated by pressing in the select button 4. Therefore, compared with a conventional cam-type column AT shift lever, the force loss and the sliding resistance are reduced, thereby making it possible to operate the select button 4 at ease. In addition, since the column AT shift lever has a simple shift knob construction including the select button 4 connected to the select cable 8, the size of the shift knob 2 can be reduced.

While the present invention has been described with reference to what is presently considered to be a preferred embodiment thereof, it is to be understood that the invention is not limited to the disclosed embodiment or constructions. To the contrary, the invention is intended to cover various modifications and equivalent arrangements.

The invention also consists in a vehicle, e.g. a car, having the column AT shift lever mounted in it.

## Claims

1. A column AT shift lever comprising:
a selecting member slidably provided inside a shift knob provided on a distal end of a shift lever body, the selecting member being elastically urged by an elastic body so that a head portion of the selecting member protrudes from the shift knob; and
a select cable extending inside the shift lever body, an end portion of the select cable being fixed to the selecting member, so that the select cable is operable by sliding the selecting member.

2. A column AT shift lever according to claim 1, wherein the select cable is curved inside the shift knob.

3. A column AT shift lever according to claim 1, wherein the shift knob has a generally letter-L shape.

4. A column AT shift lever according to claim 1, wherein the elastic body is a coil spring.

5. A column AT shift lever according to claim 1, wherein the head portion of the selecting member protrudes from a side face of the shift lever body, the side face being relatively close to the shift lever body.

6. A column AT shift lever according to claim 1, wherein the selecting member is a select button slidably disposed in a long hole which extends in the shift knob substantially perpendicularly to the shift lever body.

7. A column AT shift lever according to claim 6, wherein the end portion of the select cable is fixed to an inner side of the select button by a pin.

8. A column AT shift lever according to claim 6, wherein a stopper portion for preventing the select button from falling apart is provided in the long hole.

9. A column AT shift lever comprising:
a selecting member slidably provided inside a generally L-shaped shift knob provided on a distal end of a shift lever body, the selecting member being elastically urged by an elastic body so that a head portion of the selecting member protrudes from the shift knob; and
a select cable extending inside the shift lever body, the select cable being curved inside the shift knob, an end portion of the select cable being fixed to the selecting member.

10. A column AT shift lever according to claim 9, wherein the end portion of the select cable is fixed to the selecting member, and the other end of the select cable is connected to an end portion of a select plate.

11. A column AT shift lever according to claim 10, wherein the end portion of the select cable is connected to the selecting member by a pin, and the select plate is capable of being turned when, by a sliding movement of the select button into the shift knob transmitted by the select cable to a connecting portion of the select plate, the connecting portion of the select plate is pulled.

12. A column AT shift lever according to claim 11, wherein a detent plate is provided at another end of the select plate, the detent plate engaging with the select plate so as to restrict operation of the shift lever body.

13. A column AT shift lever according to claim 11, wherein a shift lock plate is engaged with the select plate so as to restrict the turning of the select plate.
